# EUROPEAN PATENT SPECIFICATION

(11) **EP 0 576 179 B1**
(45) Date of publication and mention of the grant of the patent: **12.03.1997**
(21) Application number: 93304568.4
(22) Date of filing: 11.06.1993
(51) Int. Cl.: B60J 1/00

(54) **Vehicular panel assembly**
Plattenaufbau eines Fahrzeuges
Assemblage d'un panneau de véhicule

(30) Priority: 12.06.1992 US 898094
(43) Date of publication of application: 29.12.1993
(73) Proprietor: DONNELLY CORPORATION, Holland Michigan 49423 (US)
(72) Inventor: Fisher, Daniel J., Holland, Michigan 49424 (US); Crank, Douglas, Holland, Michigan 49423 (US); Agrawal, Raj Kumar, Holland, Michigan 49424 (US); Carter, John W., Holland, Michigan 49424 (US)
(74) Representative: Wright, Simon Mark

(56) References cited:
- EP-A- 0 163 194
- EP-A- 0 371 810
- PATENT ABSTRACTS OF JAPAN, unexamined applications, M field, vol. 12, no. 356, September 26, 1988 THE PATENT OFFICE JAPANESE GOVERNMENT page 8 M 745
- PATENT ABSTRACTS OF JAPAN, unexamined applications, M field, vol. 12, no. 126, April 19, 1988 THE PATENT OFFICE JAPANESE GOVERNMENT page 47 M 687
- PATENT ABSTRACTS OF JAPAN, unexamined applications, M field, vol. 12, no. 134, April 23, 1988 THE PATENT OFFICE JAPANESE GOVERNMENT page 149 M 689

## Description

This invention relates to a method of making a vehicle window assembly, comprising: forming a polymeric gasket by injection molding in a mold, said formed gasket having at least one surface; providing a panel in the form of a sheet having at least one surface, said panel being separate from said formed gasket; applying a primer coating to at least one of said surfaces of said panel and said formed gasket; and forcing said formed gasket against said panel to promote adhesion between said panel and said formed gasket.

Relatively recently in the history of vehicle panel assemblies, gaskets have been moulded or extruded directly onto the window panel. In moulded window panels, a sheet of glass is closed within a moulding tool and a polymeric material is then injected around the opposing surfaces of the peripheral edge thereby capturing the peripheral edge of the glass panel within the injected polymeric gasket. After the gasket is cured, the mould is opened and the panel assembly is removed. To retain the moulded panel assembly within the vehicle, studs or clips can be moulded within, or attached to, the gasket and used to engage the pinch weld flange forming the vehicle opening. Alternatively, or in addition, a bead of adhesive is often applied to bond the glass panel directly to the metal pinch flange. A bezel may be moulded with the gasket to decorate and/or conceal space between the vehicle and the window assembly.

New styling requirements are demanding for flush mounted glass panels having an exposed edge. One flush mounted vehicle panel assembly on the market includes extruded gaskets deposited directly on one surface of a glass sheet. Often the extrusion includes two adhesive beads of polyurethane compounds, one deposited by the panel assembly manufacturer and the other applied by the vehicle assembler. Disadvantages associated with extruded gaskets include long cure time for the first bead, adding cycle time to manufacturing, and constant cross-section profiles. In addition to being limited to uniform cross-section profiles, the gasket material used in forming the extruded gaskets is typically not UV stable by itself and can degrade over time. Moreover, the extrusion does not easily adapt itself to receive mounting studs or clips. The extrusion compound is expensive and requires special storage and handling once formed and cannot be fully completed without creating a seam or gap in the gasket layout.

Another window assembly intended for use in flush mounted applications has a gasket moulded directly to a single surface in a moulding machine using reaction injection moulded (RIM) urethane. EP-A-0371810 discloses a method of making a window for an automobile. An edge of a window plate is arranged in a mould that defines the profile of a frame body. The frame body comprises a foamed inner core and a non-foamed outer skin.

Although this technique offers some variable cross-sections, the presence of the glass and tooling limitations prevented or precluded gaskets having undercuts or lips. Other disadvantages include instability when subjected to prolonged exposures of ultraviolet light, long cycle times in forming, and increased material costs compared with other materials such as PVC. In addition, tensile or shear forces applied between the glass and gasket result in failure of the adhesive seal of the gasket with the panel as opposed to the desired loss of cohesion in the gasket itself.

None of the prior panel assemblies or methods are thus versatile in providing flush mounted panel gaskets having unique cross-sectional profiles, with or without attaching or otherwise capturing fasteners. Moreover, none of the prior methods or panel assemblies can provide flush mounted panel gaskets having cross-section profiles which are variable along the panel assembly and satisfy complex sealing requirements.

The invention relates to a method of the type disclosed in EP-A-0371810 and referred to in the precharacterising portion of claim 1 and is characterised by locating said panel on said formed gasket while said formed gasket remains in the mold so that said one surface of said formed gasket and said one surface of said panel form a contact area; and forcing said formed gasket against said panel to promote adhesion between said panel and said formed gasket.

The method may further include heating a predetermined area of the panel to a desired temperature, e.g. the area in contact with the gasket. One can reapply heat and pressure to the contact area between the panel and the gasket to further improve adhesion.

Forming the polymeric gasket may include injection moulding using, for example, a liquid or slurry.

One can mould using polyvinyl chloride and/or components formed moulded urethane.

The method can involve forcing the gasket into contact with the primed portion of the panel, such as by pulling the panel against the gasket or pressing the panel against the gasket.

Heating the panel may occur prior to the step of locating the panel on the gasket. Preferably heating the panel occurs substantially simultaneously with the forcing of the panel against the gasket. Heating the panel may also occur after locating the panel on the gasket. The heating may comprise heating the portion of the panel that has received the primer.

The (sheet-like) panel may have a frit coating on the (or at least one) surface. The heating (of a predetermined area of the panel) may comprise heating the frit coating to enhance bonding of the gasket to the panel.

The method may further include:
inserting the panel assembly of the panel and adhered gasket in a fixture having a recess for receiving the gasket; and
applying heat and pressure to the area of contact between the panel and the gasket, to further improve adhesion.

The or each heating (e.g. of the panel) preferably comprises directing a controlled, focused infra red beam (onto the panel) from a side opposite the primer. This may involve moving a controlled, focused infra red beam of energy along a side of the panel opposite the primer. Thus, the heating (of the panel) can include applying controlled area infra red radiation through the panel from a side opposite the primer.

Alternatively or in addition, the heating (e.g. of the panel) may comprise applying convective or conductive heat energy and/or directing microwave energy (such as to the panel).

The pretreatment of the panel may include heating the primer and portions of the panel to a predetermined temperature before pressing the panel on the gasket. Suitably forcing and heating are performed substantially simultaneously. Alternatively, heating the boundary between the gasket and the panel can occur after forcing the panel against the gasket.

The method may further include:
providing a transparent panel to be pretreated having a frit coating in the areas to which the primer is to be applied;
applying the primer to at least a portion of the frit coating; and
heating the frit coating between the panel and the gasket to promote adhesion of the gasket to the panel.

Preferably one can additionally:
move the panel and adhered gasket as an assembly and insert the assembly in a fixture having a recess for receiving the gasket; and
simultaneously apply heat and pressure to the contact area between the panel and the gasket to further improve adhesion.

The heating of the boundary between the gasket and the panel may include controlling the temperature using a computer and/or a spectrophotometer.

Suitably the heating is restricted to the layout of the gasket. The heating suitably includes preheating at least portions of the sheet in at least one of the gasket forming mould and out of the gasket forming mould. The forcing of the panel against a gasket may comprise drawing the panel against the gasket.

Suitably heating the opaque frit coating is to a temperature between approximately 37.8°C and 176.7°C (100°F to 350°F).

The invention thus extends to a method for making a panel assembly by attaching a gasket to a single surface of a glass panel, the method comprising:
providing an (e.g. sheet-like) glass panel of predetermined size and geometry;
priming at least a portion of the panel adapted to receive a gasket;
heating at least that portion of the panel adapted to receive the gasket to a temperature greater than 37.8°C (100°F);
injection moulding separately from the panel, a polymeric gasket of predetermined profile having a surface adapted to engage the portion of the panel;
locating the primed and heated panel to the newly moulded gasket while the gasket retains heat generated during moulding;
forcing the panel and the gasket into direct contact with each other; and
heating the area of contact between the panel and gasket to improve adhesion.

The method may further include providing the sheet-like glass panel with an opaque ceramic frit coating along the portion of the panel adapted to receive the gasket. The locating can include placing the sheet-like glass panel with respect to the gasket within one minute of moulding the gasket. The ceramic frit coating is preferably heated to a temperature greater than 37.8°C (100°F).

Thus in preferred embodiments the invention relates to a method for making a panel assembly for use on vehicles, the method comprising:
providing a sheet-like glass panel of pre-determined size and shape;
priming at least a portion of the panel adapted to receive the gasket;
injection moulding separate from the panel at least one polymeric gasket in a mould apparatus using an insert;
replacing the insert with the primed panel while retaining the gasket in the mould apparatus; and
pressing at least one polymeric gasket in contact with the panel to promote adhesion between the panel and gasket.

The method may further include depositing an opaque frit coating about a perimeter of at least one surface of the sheet-like glass panel adapted to receive the gasket. One may heat at least that portion of the panel adapted to receive the gasket, such as by applying radiant heat energy to the contact area between the gasket and the panel to improve adhesion. This heating may occur after priming and/or substantially simultaneously with pressing, and/or after pressing. Suitably heating the contact occurs substantially simultaneously with the heating during pressing.

The method may include reapplying a force to the panel and the gasket to force them against each other to maintain the optimum surface area of the contact. One can heatthe contact area between the panel and the gasket, e.g. substantially simultaneously with the reapplication of force. The method may thus further include heating the contact area between the panel and the gasket following the reapplication of pressure forcing the panel against the gasket.

The invention thus contemplates a method for making a panel assembly for use in a vehicle opening, the method comprising:
providing a sheet-like panel of size and geometry adapted to fit in the vehicle opening and having a first and second surface, each terminating in a common peripheral edge;
forming a first polymeric gasket separate from the sheet-like panel in a predetermined profile and configuration in a mould, and adapted to engage at least a portion of the panel along the first surface;
forming a second polymeric gasket separate from the sheet-like panel in a predetermined profile and configuration in a mould, and adapted to engage at least a portion of the panel along the second surface; and
locating the sheet-like panel with respect to the first and second gaskets so that the first and second gaskets engage said portions of the first and second surface, respectively.

The method can further comprise bonding the first and second gaskets to the sheet-like panel by applying pressure, forcing the first and second gaskets against the sheet-like panel while said gaskets retain a substantial amount of heat generated during forming.

Preferably one includes heating the sheet-like panel, such as before locating the panel with respect to the first and second gaskets, after locating the panel with respect to the first and second gaskets, and/or substantially simultaneously with bonding.

The method may further include priming at least portions of the first and second surfaces adapted to receive the first and second gaskets with an adhesion promoting priming composition prior to heating. The heating is preferably of the contact boundaries between the sheet-like panel and the first and second gaskets. This may comprise focusing infra red energy through the sheet-like panel from sides opposite the first and second gaskets.

The method may further include providing a frit coating between the panel and at least one of the gaskets and heating the frit layer.

Preferably one can also locate at least the second gasket on the panel with an extending portion projecting beyond the peripheral edge, so that the extending portion may form a weather seal in the assembly.

Suitably forming the first and second polymeric gaskets includes moulding each in a mould apparatus from a polymeric material using a mould insert and removing the insert while retaining the gaskets in the mould apparatus prior to locating the panel with respect to the first and second gaskets.

A particularly preferred method according to the present invention comprises:
(a) optionally cleaning a surface of a panel, suitably with a solvent;
(b) optionally heating the panel to drive off any remaining carrier or solvent;
(c) forming a gasket, suitably by a moulding process, such as by injection moulding. The gasket preferably comprises PVC, and is suitably heated to a temperature at up to 196°C;
(d) applying a primer to a surface of the panel and/or gasket, such as by using a brush, pad, roller or spray (the primer may be directly applied or in the case of the panel, may be applied to a layer or coating already present on the panel, which may be a (e.g. ceramic) frit. The primer preferably comprises a heat, pressure and/or chemically activatable material;
(e) optionally removing any mould releasing agent from the gasket that may be employed during a moulding process;
(f) contacting the primer present on the panel with the gasket to thereby bond the gasket and panel together.

Preferably the primer is heated, or at least has its temperature raised. This may be achieved by specifically heating the primer (either directly or via either the gasket or the panel) or indirectly by any remnant heat of or from the gasket, which may have been cooling down after moulding. Suitably, the gasket will be at a temperature of 37°C to 149°C when it comes into contact with the primer.

Contact between the panel and gasket, via the primer, suitably takes from 3 to 30 seconds.

As has been mentioned, the primer is preferably heated. Its temperature can be increased by heating the panel prior to the primer contacting the gasket. Any suitable form of heating can be employed, such as by conduction, induction, convection and/or radiation. The latter is preferred, suitably electromagnetic radiation, such as infra red or microwave radiation. This is preferably for from 3 to 30 seconds, up to a temperature of approximately 150°C. Heating is suitably from the side opposite from the gasket.

Pressure may optionally be applied to force the gasket and panel close together. Although the panel's own weight may be sufficient, other means to apply pressure may be employed, such as negative pressure (by using a vacuum) or by a mechanical pressure.

It will of course be realised that more than one gasket can be used, in which case the second gasket may be in the form of a trim piece. The process is equally applicable to one or more gaskets, although naturally it is preferred that any if not all of the gaskets are subjected to the same stages at the same time. Clearly it will be preferable to prime respective surfaces of the panel for each gasket.

Fastening means may be included in the gasket. The or each gasket may thus be provided with attachment means for securing it to an opening such as in a vehicle, and so in preferred embodiments the gasket is provided with attachment means in the form of one or more male members (such as a screw or stud) which may cooperate with an appropriately positioned female member at or near the opening (such as in the vehicle).

The invention extends to products (e.g. panel assemblies) made according to the method of the invention.

The invention extends to a panel assembly comprising a panel having a peripheral edge and at least one surface; a gasket formed by injection molding in a mold having an arciform body and first and second securing flanges adapted to engage the sheet-like panel at spaced locations; and a heat-activated primer coating disposed on said at least one surface of said panel for bonding said gasket to said panel.

The panel assembly may further comprise a frit layer, suitably deposited between the gasket and the panel. Preferred primers are heat activatable. Suitable primers will thus usually comprise one or more solvents and an epoxy resin system. Preferred primers may comprise methylethylketone, toluene, butylalcohol together with the epoxy resin system.

The primer may be provided with an adhesion promoter. This may comprise a polysiloxane composition. Preferred promoters include compositions comprising methylethylketone, toluene and 3-methoxyethanol as well as the polysiloxane component.

The assembly may additionally comprise first and a second securing flanges extending from the (e.g. arciform) body and having portions adapted to engage the sheet-like panel at spaced positions.

The adhering means preferably comprises an adhesion promoting primer deposited on at least one of the panel and the gasket for securing the flanges to the frit layer.

The arciform body and first and second securing flanges may cooperate with the sheet-like panel to form a tubular chamber. The assembly may further comprise a lip seal extending from, and integral with, the first securing flange, the lip seal adapted to extend outwardly from the gasket and beyond the peripheral edge.

The assembly may further comprise:
an enlarged second securing flange; and
a fastener moulded within and captured by the second securing flange for mechanically fastening the panel assembly in an opening.

Preferably the assembly comprises:
a lip seal formed separately from the panel and extending beyond the peripheral edge, adapted to engage a surface of the panel opposite the gasket; and
means for bonding the lip seal to the panel.

Advantageously:
the panel is glass;
the gasket is formed from a polymeric material, and suitably bonded only to a single surface of the panel;
the single panel surface includes a ceramic frit layer; and/or
there is an adhesion promoting primer coating on the frit layer between the first and second securing flanges and the frit layer.

Thus the means for adhering the first and second securing flange to the panel can include a heat (or pressure or chemically) activated (or activatable) primer.

Suitably the gasket is preformed from a polymeric material.

In preferred embodiments the invention encompasses a panel assembly for use in a vehicle opening, the assembly comprising:
a sheet-like panel of size and geometry adapted to fit in the vehicle opening, the panel having first and second surfaces, each terminating in a common peripheral edge;
a first polymeric gasket formed separate from the sheet-like panel in a predetermined profile and adapted to engage at least a portion of the panel along the first surface proximity to the peripheral edge;
a second polymeric gasket formed separate from the sheet-like panel in a predetermined profile and adapted to engage at least a portion of the panel along the second surface; and
means for bonding the first and second gaskets to the first and second surfaces of the panel.

The first gasket may include:
first and second securing flanges each having a bonding surface secured to the panel; and
an arciform body interconnecting the first and second securing flange, the arciform body having an inner wall and, together with the panel, defines a gas filled chamber.

The first gasket may thus include a lip seal extending from and integral with the first securing flange so as to extend beyond the peripheral edge of the panel for engaging the vehicle. The first gasket may also include an enlarged second securing flange formed about and capturing a fastener which is embedded in and projects from the second securing flange for locating the panel in the vehicle opening. The second gasket may include a seal having a flexible, resilient lip projecting beyond the peripheral edge of the panel from the second panel surface.

The assembly may include a frit layer on at least one of the first and second panel surfaces between the panel and at least on of the gaskets.

In preferred embodiments the invention encompasses a panel assembly for use in a vehicle opening, the assembly comprising:
a sheet-like panel having first and second surfaces terminating in a common peripheral edge;
a seal formed separately from the panel, having a first surface, and adapted to engage the first panel surface and extend outwardly beyond the peripheral edge, the seal having a flange for locating the panel within the vehicle opening, extending substantially perpendicular from the first seal surface at a position outboard of the peripheral edge; and
heat activated means for bonding the seal to the first surface of the panel.

Accordingly, the present invention provides a unique panel assembly, especially for vehicles, having a gasket formed on a single surface suitable for use in flush mounted panels, and a method for making such a panel assembly. Moreover, the invention provides new and unique gasket cross sections having special applications in both fixed and movable panel assemblies which could not previously be obtained using conventional moulding processes.

A method for manufacturing the panel assembly, especially adapted for use in vehicle windows, can include priming a surface of the panel adapted to receive the gasket using a material especially adapted to prepare the glass surface to bond with the gasket. The desired gasket profile can be formed from a polymeric material in a mould separately from the glass panel. Once the gasket is formed, the glass panel can be appropriately located with respect to the gasket while in the mould and pressed into contact with the bonding surface of the gasket to promote adhesion. The glass panel and attached gasket can then be forwarded on as a finished product.

In a preferred method, the panel is preheated after receiving a primer to drive off any carriers/solvents and elevate the energy level of the bonding agents present in the primer. Substantially simultaneously with pressing the preheated panel into contact with the gasket, additional heat energy can be applied to the contact boundary between the panel and gasket in order to further the bonding process. The heat energy may be applied using any one of a number of sources, although (focused) infra red radiation is preferred.

Alternatively or in addition, once the gasket has been bonded to the panel to form the panel assembly, it may be subjected to a final compressive force and/or radiation treatment. The assembly may be located in a separate fixture where the panel is again forced against the contact surface of the gasket. Radiant or other energy is focused to heat the contact boundary. The primer, activated by the application of heat and pressure up to as long as 30 seconds, is energized to a state to chemically bond with the gasket.

Preheating of the panel may be reduced or eliminated by applying the primer to the gasket surface after being formed. Moreover, if preheating is desired, heat may be applied to the panel from one or both sides.

The method is particularly suitable for the manufacture of a panel assembly especially adapted for use in vehicles. More particularly, the method can be used to manufacture window panel assemblies for vehicles where the glass panel is held within the vehicle by one or more gaskets bonded to a single surface of the panel.

The panel assembly manufactured by the above process may comprise a sheet-like panel having at least one surface area coated with a heat activated primer. A gasket having a body supported by at least one securing surface is formed separately from the sheet-like panel. The securing surface(s) of the gasket are urged into contact with the primed surface of the panel while still retaining a portion of heat generated during the formation process. The remnant heat in the gasket activates the primer to bond with the gasket. The resulting product or panel assembly is a sheet-like panel having a gasket securely attached to at least a portion of at least one surface.

In an alternative embodiment of the panel assembly, the preformed gasket may have a variety of cross-sectional profiles and each of these may change in size along the gasket to meet specific applications. An arciform gasket may be made and have one or more securing surfaces or flanges in contact with the panel. The arciform, curved body may include a gas-filled cavity wherein one wall of the cavity is formed by the panel. The cavity may be sealed or perforated to provide an appropriate seal for the application.

In another embodiment of the panel assembly, the gasket may have a lip or flap which extends beyond the peripheral edge of the panel to form, in use, a flexible, resilient seal with the vehicle body.

In yet another embodiment of the panel assembly, one securing flange or surface of the gasket may be enlarged, adapted to capture a mounting stud or locating device inserted in the gasket forming process and adapted to locate or retain the panel assembly in the vehicle.

As will be understood from the invention, numerous advantages for panel assemblies and the methods of making the same may be provided by this invention. These include manufacturing simplification by eliminating the need for complex moulding tools machined to a fine tolerance to accept curved, sheet-like glass or other panels. The method can provide a significantly better manufacturing consistency and tolerance for fitting the gaskets to sheet-like panels over prior known single sided, extruded or other techniques. Moreover, the method provides panel assemblies having a continuous gasket wherein the cross-section profile and/or size of the profile may vary continuously along the length of the gasket. Alternatively, separate gaskets, each of a different shape or size may be applied to separate surfaces of the panel, or to separate (e.g. respective) areas of the same panel surface. This unique ability to change the shape of the gasket for a given portion of the window may provide the optimum amount of gasket to seal the window in the opening where prior constant profile gaskets provided either too much or not enough gasket to seal the opening. Furthermore, the method may allow strong, secure attachment of the gasket to a single side of the sheet-like panel so that the exterior surface of the panel assembly can be substantially flush with the exterior sheet metal portion of the vehicle body.

The panel assemblies manufactured according to the method of the invention have advantages in that the gasket on the panel may be specifically formed to provide a specific function which can change around the perimeter of the window panel. The panel may assembly require less material than prior art fully encapsulated panel assemblies, thus resulting in a less costly product. Moreover, because of the lower pressures required to bond the gasket to the sheet-like panel, fewer panels may be broken during the manufacturing process. Yet another advantage of the invention is the ability to place the panel assembly in existing vehicles with varied and/or more complex gasket designs for sealing the panel assembly in the vehicle.

Further benefits and advantages of the invention may include the ability to form gaskets for panels that could not be made using traditional moulding or extruding techniques. These include unusual cross-sections such as bulb seals and lip seals having the ability to contain various attachment devices, while providing a flush mounting arrangement of the panel exterior. The method and panel assemblies of this invention can find particular application in Class "A" window panels for use in vehicle windshields, windscreens, gaskets on laminated panels, and panel assemblies for movable windows.

In this specification "vehicle" includes, but is not limited to motor vehicles such as cars and motor cycles, commercial vehicles, such as vans, lorries, HGVs, earth moving machinery and agricultural machinery (such as tractors).

Preferred features and characteristics of one aspect of the invention are as for another *mutatis mutandis.*

The invention will now be described in greater detail with reference to the accompanying drawings, which merely exemplify the invention and are not to be construed as being limiting, and in which:
Fig. 1 is a fragmentary view of a panel assembly according to the invention mounted in a vehicle opening;
Fig. 2 is a fragmentary section of the panel assembly of Fig. 1 taken along line II-II;
Figs. 3a-3d schematically illustrate a first embodiment of a method according to the invention;
Figs. 4a-4j schematically illustrate a second, and preferred embodiment of a method and panel assembly according to the invention;
Figs. 5a-5k schematically illustrate a third embodiment of a method and panel assembly according to the invention;
Figs. 6a-6e schematically illustrate a fourth embodiment of a method according to the invention;
Fig. 7 is a fragmentary section of a fourth embodiment of a panel assembly of the invention that may be used in Fig. 1;
Fig. 8 is a fragmentary section of a fifth embodiment of a panel assembly of the invention that may be used in Fig. 1;
Fig. 9 is a fragmentary section view of a sixth embodiment of a panel assembly of the invention for use in movable panels;
Fig. 10 is a fragmentary section view of a seventh embodiment of a panel assembly made in accordance with a method according to the invention;
Fig. 11 is a fragmentary section of a class "A" panel assembly made in accordance with a method of the invention;
Figs. 12 and 13 are schematic diagrams illustrating two examples of energy sources used in methods according to the invention; and
Figs. 14 and 15 are two further schematic diagrams illustrating alternate pressure application techniques between the gasket and sheet-like panel used in method according to the invention.

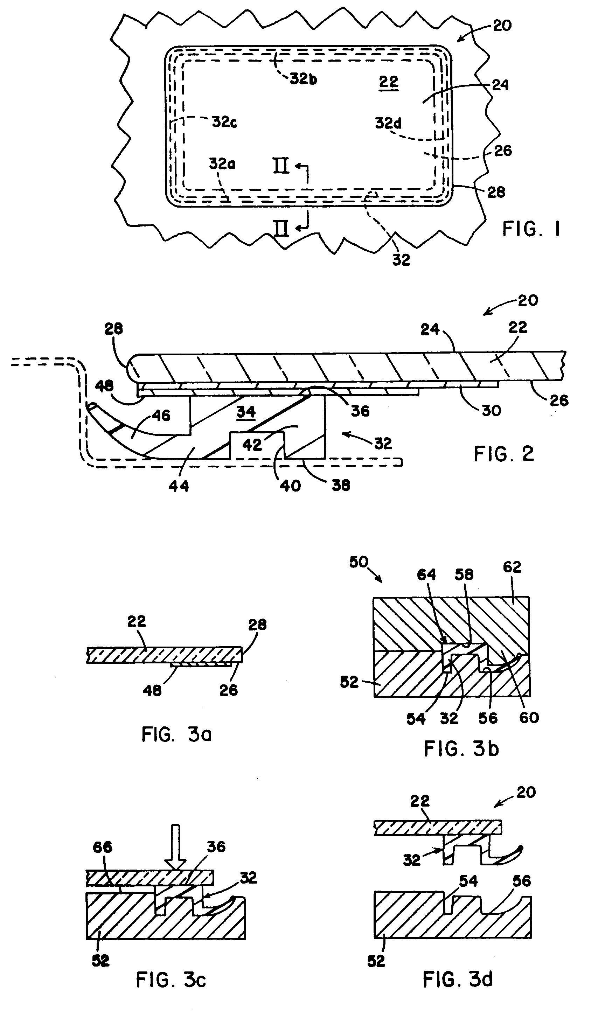

In the drawings like reference numerals are used in different figures to indicate like components. Figs. 1 and 2 illustrate a first embodiment 20 of the window panel assembly of the present invention. The assembly 20 is specifically adapted for use as a vehicle window and includes a panel or sheet 22 of transparent glass which may be tempered, laminated or otherwise strengthened with conventional techniques or principles. The sheet 22 has two substantially parallel sides or faces 24, 26 which terminate at a peripheral edge 28. Although transparent glass is preferred, other panel materials such as opaque or coated glass, or transparent, coated or.opaque plastic materials, or multi-composite laminates such as transparent glass and plastic can also be used. The sheet 22 may also include an opaque, and preferably black ceramic frit layer or coating 30 applied and adhered to one surface 26 covering and concealing an area adjacent peripheral edge 28.

Fixed to surface 26 and/or ceramic frit layer 30, and extending along and around at least a portion of sheet 22 in proximity to peripheral edge 28, is a flexible, resilient gasket (or grommet) 32 intended to provide a weather seal with a portion of a vehicle body when assembly 20 is installed. In Fig. 1, gasket 32 extends around the entire perimeter of surface 26.

In Fig. 2, the gasket 32 comprises a body 34 having a generally rectangular cross section defining a first surface 36 disposed toward sheet 22. Although surface 36 may be substantially smooth, it may contain an irregular or patterned texture to provide a greater surface area to bond to frit layer 30. An opposite surface 38 is shown comprising a rectangular channel 40 extending along the length thereof. Channel 40, in turn, defines first and second flanges 42, 44 on either side thereof and which run adjacent channel 40. Running the length of gasket 32 and extending laterally from flange 44 is a resilient, flexible lip seal 46. The seal 46 is generally arcuate, having a radius located toward sheet 22, and terminating beyond peripheral edge 28. The gasket 32 is shown with surface 36 engaging and bonded by primer adhesive 48 to frit layer 30 deposited on sheet surface 26.

The size and/or thickness of the body 34 and seal 46 may vary depending upon the gap to be closed, and the sealing force necessary in the vehicle after installation along a given length of the gasket. For example, gasket portion 32a (Fig. 1) may have a high profile while gasket portion 32b at the opposite side of panel 22 may have a low profile. Gasket portions 32c and 32d may have gradational profiles decreasing in size from portion 32a to portion 32b. As will also become more apparent below, panel 22 may have a gasket with more than one cross-sectional profile, or may have separate gasket portions of the same or differing size, thickness and/or profile.

Although the gasket or grommet 32 may be made using a variety of techniques, including liquid or slurry moulds, and compression moulding, the preferred technique is injection moulding using a polymeric thermoplastic material such as polyvinyl chloride (PVC). However, other moulding materials can also be used with the above methods including reaction injection moulded (RIM) urethane and thermoplastic elastomers such as thermoplastic rubber (TPR), thermoplastic urethane (TPU) and thermoplastic olefin (TPO).

Figs. 3a-3d schematically illustrate one embodiment of the method. The sheet 22 may be conveyed to a preparation area where one surface such as peripheral area 26 near edge 28 may be cleaned with a solvent such as methylethylketone to remove oils, dirt or other debris which may interfere with the bonding process. A coating 48 of primer material is applied to surface 26 and/or frit layer 30 to prepare the panel surface to receive gasket 32. The primer is selected to enhance the adhesion or bond between the gasket 32 and the sheet surface 26 and/or frit layer 30 and may be any of several varieties depending on the material used for gasket 32 and sheet 22 such as heat and/or pressure activated compositions. The primer may be applied by brush, pad, roller or spray and be allowed to wholly or partially dry to obtain a substantially uniform, even and areally restricted primer coating. A preferred primer for PVC gaskets is sold under the designation A-1100-B (comprising methylethylketone, toluene, butylalcohol and an epoxy resin system) combined with an adhesion promoter designated A-1167-B (comprising methylethylketone, toluene, 3-methhoxyethanol and a polysiloxane) and produced by B. F. Goodrich Co. of Akron, Ohio. Substantially simultaneously with the preparation of sheet 22, gasket 32 is formed, preferably using conventional injection moulding techniques. As shown schematically in Fig. 3b, one such tool 50 includes an upper mould half 62 having a channel 58. The tool 50 also includes a lower mould half 52 having channels 54, 56 for forming flanges 42, 44 and the outer radius of lip seal 46. Channel 58 and ridge 60, formed in upper mould half 62, and channels 54, 56 in lower mould half 52 combine to form a mould cavity 64 in which body 34 and lip seal 46 of gasket 32 are defined and moulded. Preferably, moulding is carried out with polyvinyl chloride (PVC) such as 48562 available from Vista Chemical Co. of Aberdine, Mississippi. If a mould release agent is used, the agent should be cleaned from the gasket before adhering it to the panel. If not cleaned, the mould release agent may inhibit the bonding of the gasket to any other material such as panel 22.

Following the forming of gasket 32, one-half of tool 50, such as 62, is removed leaving gasket 32 within mould half 52. Since the gasket 32 is formed by cooperating tool halves 52 and 62, surface 36 has a positive relief with respect to surface 66 of tool half 52 when opened. The gasket 32 may be retained within mould half 52 using a variety of techniques, including mould undercuts, protrusions, core pins and the like (none of which are shown).

With gasket 32 held by mould half 52, the moulding tool 50 may be opened. The sheet 22 is removed from the preparation area and precisely located on gasket 32 with locating pins, templates, guides or the like to place primed surface 48 into contact with surface 36 (Fig. 3c). Since the gasket 32 is still hot from the moulding process (between 37.8°C and 148.9°C, 100° to 300° F.), it activates the primer 48 to bond the gasket 32 with surface 26 and/or frit layer 30. The bond is improved by pressing sheet 22 against surface 36, ensuring an optimum surface area is in uniform, complete contact with the primed surface 48. After a predetermined period of time (between 3 and 20 seconds) allowing gasket 32 to bond with and cure on sheet 22, the panel 22 and attached gasket 32 are removed from lower tool half 52 as panel assembly 20 (Fig. 3d) and moved on as a finished product where it is packaged for shipping.

This process, using the remnant heat of the injection moulding process, together with the compression of sheet 22 against surface 36, may be sufficient to form a strong bond adhering gasket 32 to sheet 22. A variety of devices may be used in locating sheet 22 on gasket 32 including the use of locating pins, and/or guided robotic arms (not shown) having the ability to precisely locate each panel.

Although the procedure previously described with reference to Figs. 3a-3d bonds the gasket 32 to surface 26 and/or frit layer 30 of sheet 22, it is preferred that certain additional and/or optional steps be performed to further improve the strength of the bond between gasket 32 and sheet 22.

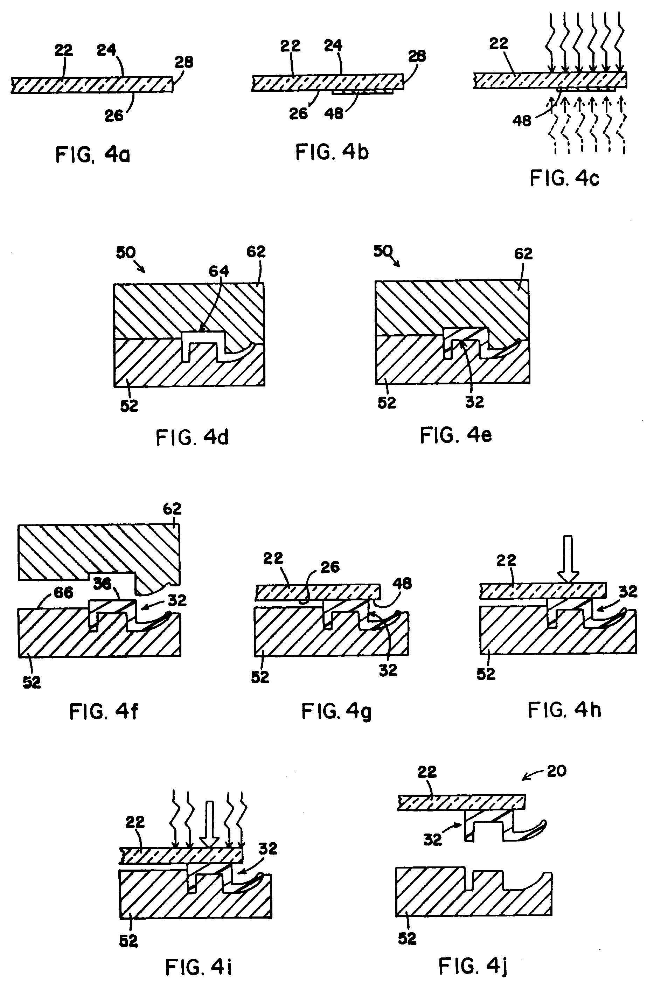

Referring to Figs. 4a-4j, a preferred method for making a panel assembly 20 comprises obtaining a sheet or panel 22, preferably of glass and of predetermined geometry, to receive gasket 32. Panel 22 may include a ceramic frit coating 30 (Fig. 2) deposited on at least one surface such as 26 in proximity to peripheral edge 28. Once the appropriate sheet 22 is selected, the perimeter of surface 26 and frit layer 30 adapted to receive gasket 32 may be cleaned using any one of a variety of procedures to provide a clean bonding surface. As briefly mentioned above, a solvent such as methylethylketone may be applied to surface 26 and frit layer 30 to remove any oil or other debris which might inhibit bonding. A primer coating 48 is applied to that portion of sheet 22 and frit layer 30 to receive the gasket. For certain types of sheets 22 without a cosmetic frit coating, primer coating 48 may be applied directly to the sheet. Primer coating 48 may be applied to sheet 22 in a spray, by a pad, brush or roller. With sheet 22 prepared, it is preheated to drive off any remaining carriers/solvents and raise the temperature of primer coating 48 and frit layer 30 (such as between 65.6°C and 176.7°C, or 150° to 350° F see fig. 4c) . The energy necessary to heat frit layer 30 and primer 48 may be generated by a number of sources and directed into the frit layer in a variety of directions, the details of which are explained more fully below.

Gasket 32 is formed substantially simultaneously with the preheating of sheet 22. Tool cavity 64 (Fig. 4d) formed by tool halves 52, 62 is injected with a polymeric material such as polyvinyl chloride (PVC) (Fig. 4e) as previously described. After a predetermined period of time sufficient for gasket 32 within tool 50 to substantially cure, set or harden, halves 52, 62 are separated so that the surface 36 extends above upper surface 66 of lower tool half 52 (Fig. 4f).

After tool 50 is opened, exposing surface 36 of gasket 32, and before gasket 32 substantially cools down, heated sheet 22 is precisely located on gasket 32 still retained by tool half 52 using locating pins, templates, guides or the like. Surface 26 and primer coating 48 are urged against surface 36 for a pre-determined period of time between 3 and 30 seconds. The force used to urge sheet 22 against surface 36 of gasket 32 should be sufficient to assure that substantially all of surface 36 is in uniform contact with primed surface 48 and bonded therewith. The amount of pressure required to optimize the contact between sheet 22 and surface 36 is dependent upon several factors, including the total surface area of surface 36 in contact with sheet 22, the size and geometric shape of sheet 22, the temperature of gasket 32 and sheet 22, and the exact nature of the material forming gasket 32. For example, for a substantially flat glass sheet 4 millimetres thick, having a surface area of approximately 1 square metre, and a 85 Durometer (Shore A) PVC gasket extending substantially around the perimeter of the sheet with a one inch wide (2.54 mm) bonding surface 36, the pressure required to affect a secure bond is between one-half and five atmospheres [or approximately 7 to 75 pounds per square inch (psi)].

Substantially simultaneously with the forcing of sheet 22 against surface 36 of gasket 32, a radiant or electromagnetic energy is applied for approximately 3 to 30 seconds to frit coating 30 between surface 36, primer coating 48 and surface 26 of sheet 22. Preferably, infra red energy is focused using a CFIR heat source, described below, to have the maximum effect on frit layer 30. Depending upon the materials used to form gasket 32, and the temperature of sheet 22 and gasket 32, the time required to maintain sheet 22 against surface 36 (Figs. 4h, 4i) will vary. For PVC and A-1100-B primer mixture described above, it is contemplated that a pressure of approximately 1 Atm (14 psi) and heat raising the temperature to approximately 150°C (300° F) may be applied approximately between 3 and 30 seconds. Following the application of pressure and heat for the predetermined period of time, the bond between gasket 32 and sheet 22 should be optimised. At this point, panel assembly 20, including sheet 22 and bonded gasket 32, may be removed from lower tool 52 (Fig. 4j) and moved on as finished goods.

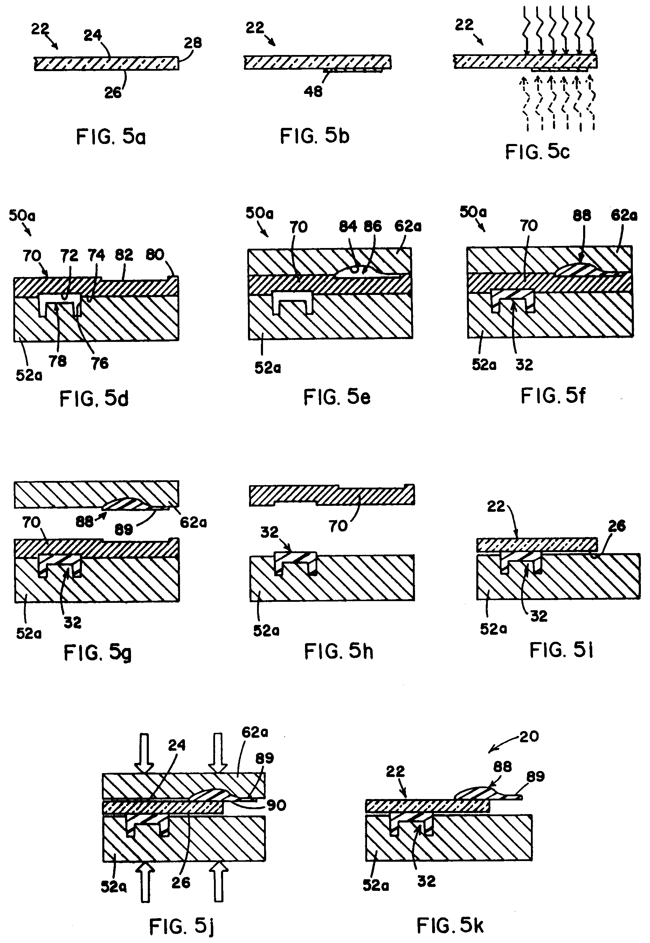

In another embodiment of the invention (Figs. 5a-5k), two gaskets adapted to be adhered to opposite portions of panel 22 are formed simultaneously. Tool 50a is adapted to receive an insert 70 having a recess or channel 72 on one surface 74 adapted to fit in registered alignment with groove or channel 76 in tool half 52a combining to form a tool cavity 78 (Fig. 5d) to form one gasket 32. An opposite surface 80 of insert 70 contains a channel 82 which fits in registered alignment with a contoured channel 84 defined in tool half 62a to form cavity 86 (Fig. 5e) to define a seal or second gasket 88. Again, a mould release material may be applied to the surfaces of insert 70, as well as channels 76, 84 to prevent the formed gaskets 32, 88 from sticking. This may be particularly true for the surfaces of the insert forming portions of the mould cavities. With tool halves 52a and 62a closed about insert 70, polymeric material, such as PVC, is injected into each cavity 78, 86 to form first gasket 32 and second gasket or trim piece 88 (Fig. 5f).

With gasket 32 and trim piece 88 substantially cured or hardened, but still retaining heat produced during the moulding process, tool 50a is opened retaining trim piece 88 in tool half 62a, and gasket 32 retained in tool half 52a (Figs. 5g and 5h). If a mould release agent is used, mechanical means may be used to retain the gaskets in their respective mould halves 52a, 62a such as pins, undercuts in the channels, or by a vacuum. Without the mould release agent, each gasket may stay in the channel in each mould half 52a, 62a without the above structures.

With each gasket and/or seal held by tool halves 52a, 62a, insert 70 is removed (Fig. 5h) and heated sheet 22 is precisely located by pins or other mechanisms on gasket 32 contained in tool half 52a (Fig. 5i). As in the previous embodiment, sheet 22 is located so that primed surface 26 engages surface 36 of the gasket. With sheet 22 properly located on gasket 32, tool half 62a, retaining trim piece 88, is closed placing surface 90 of trim piece 88 into intimate contact with surface 24 (Fig. 5j). Preferably, surface 24 which will contact surface 90 of trim piece 88 has been previously primed in the same manner as surface 26. Trim piece 88 is positioned on sheet 22 by tool half 62a such that a resilient, flexible lip 89 extends beyond the peripheral edge of sheet 22 to form a weather or lip seal. It is preferred that surfaces 36, 90 of gasket 32 and trim piece 88, respectively, be urged into intimate contact with surfaces 24, 26 of sheet 22 by closing tool 50a to assure completion of the bond over the maximum possible surface area. At this time, heat may be applied to raise the temperature of the bonding surface or contact between each polymeric element 32, 88 and sheet 22 using one of a variety of sources including conduction, induction, radiation and/or convection. As in the previous embodiment, the pressure and temperature ranges may vary depending upon the size and geometry of the panel, the gasket material used, the temperature of the gasket and/or sheet, and the surface area of the gasket to contact the panel. It is contemplated that the ranges specified above will vary depending on the materials, conditions and specific application. Following the optional application of pressure and heat (approximately between 3 to 30 seconds) both heat and pressure are removed and the finished assembly is removed and forwarded as finished goods (Fig. 5k).

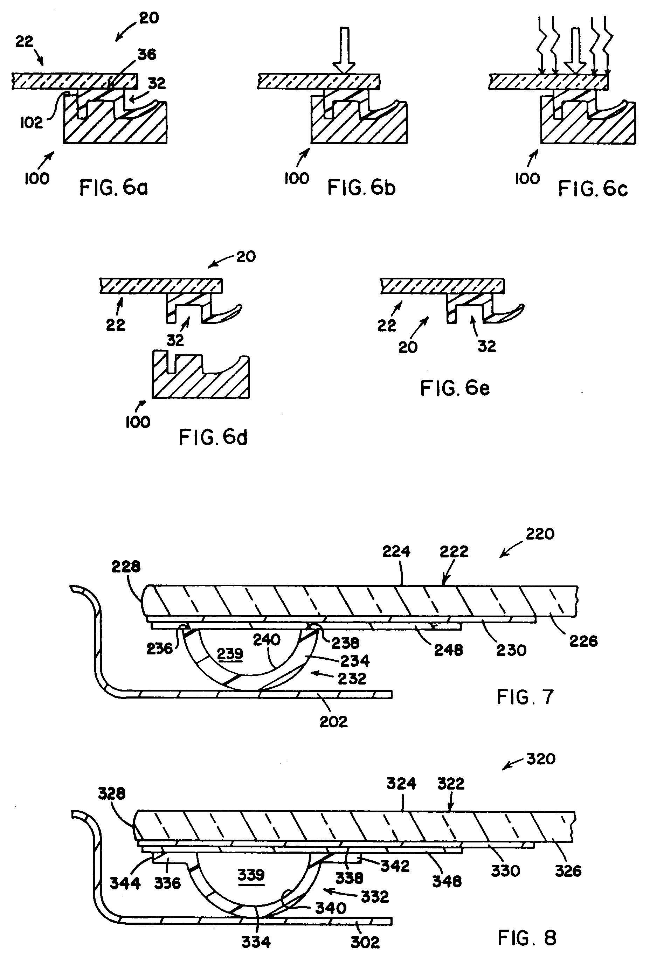

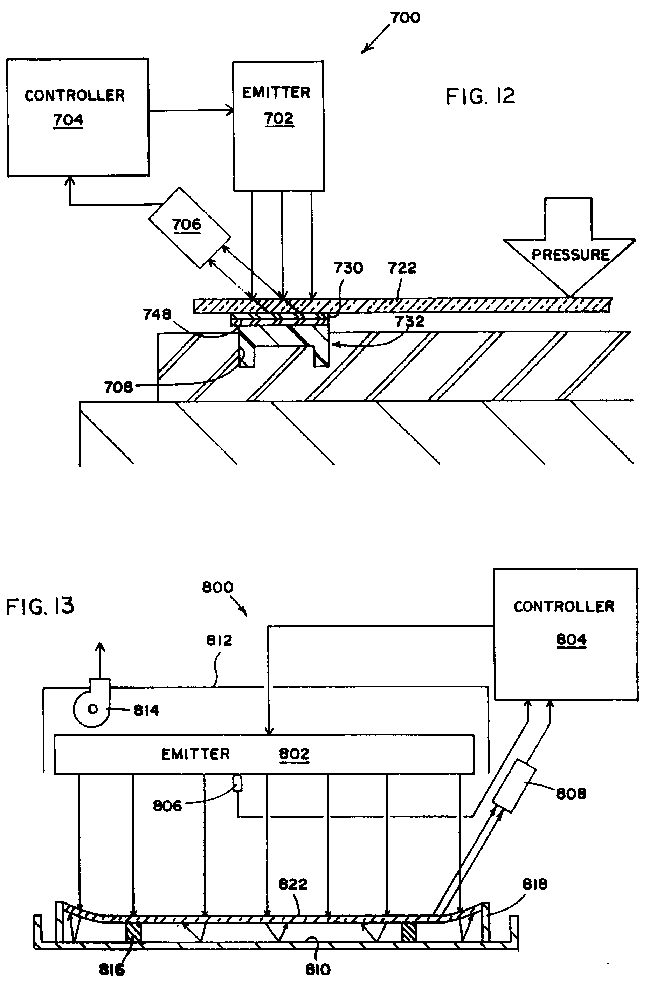

In addition to the steps outlined above, or if it is found to be impractical to apply heat to the contact surface between the premoulded polymeric material and sheet 22 while in tool 50a, or it is found to be undesirable, the heat and/or pressure may be applied in a separate fixture. In an alternative to the steps outlined above, or in addition thereto, the steps illustrated by Figs. 6a-6e may be followed. It shall be assumed, for the purposes of this discussion, that some or all of the above steps have been completed to initially bond gasket 32 and/or trim piece 88 to sheet 22 to form panel assembly 20. Panel assembly 20 may be moved to a separate fixture, such as 100, having a profiled recess adapted to receive and seat gasket 32, such that surface 36 has a positive relief with respect to surface 102 (Fig. 6a). Sheet 22 may again be forced into intimate contact against surface 36 (Fig. 6b). Substantially simultaneously with the application of pressure, energy may also be directed onto or through sheet 22 to heat frit layer 30 or contact boundary 90 between gasket 32 (or trim piece 88) and sheet 22. The source of the energy may again constitute or include the various sources that will be further described with respect to Figs. 12 and 13. The application of pressure and heat is maintained for the desired number of seconds to assure a complete and secure bond of gasket surface such as 36 with sheet 22 (Fig. 6c). Following this step, panel assembly 20 is removed from fixture 100 and is prepared for packaging (Figs. 6d and 6e).

Although the application of heat has been described with respect to the use of infra red or electromagnetic energy sources, heat may also be applied by several other sources including conduction, convection, induction and radiation sources. Similarly, the pressure or force necessary to urge panel 22 against gasket 32 may be achieved in an autoclave or by the weight of the individual panel on the gasket.

In operation, assuming a substantially flat, rectangular panel 122 cm (4 feet) wide by 61-7.6 cm (2-1/4 feet) high and 4 millimetres thick, the perimeter of one surface of the sheet may be cleaned, as described above, to remove any debris or other material which may inhibit bonding. A coating of the primer A-1100-B and promoter A-1167-B mixture made by B. F. Goodrich Co. of Akron, Ohio, is applied in a substantially even coat to the outer 10 cm (4 inches) of the perimeter. The primer may be applied directly to a ceramic frit coating such as 30 shown in Fig. 2, using the frit coating as a gauge for the distribution of the primer. Once the primer is applied, the frit layer and/or sheet is preheated using one of the energy sources described later. It is preferred that the energy generated by the source be absorbed by and heat the ceramic frit layer, drying the primer by driving off any remaining solvents therein, as well as heating the surface of the panel adapted to receive the gasket.

Substantially simultaneously with the preparation and preheating of the panel, one or more gaskets of predetermined shape and profile are formed in the moulding tool, as has been described. The preferred method of forming the gasket is injection moulding using polyvinyl chloride. A preferred PVC is that made by Vista Chemical Co. previously described. The heated PVC material is injected into a mould cavity formed by the mould halves pressed tightly together. The hot PVC, together with the pressure used to inject the PVC into the mould, increases the temperature level of the PVC to about 196°C (385° F). The gasket is allowed to harden or cure to the shape defined by the mould.

Less than one minute later, the mould is opened and the heated sheet is located on the newly formed gasket which has cooled to a temperature of approximately 52°C (125° F). A pressure of approximately 0.5 to 4.7 Atm (7 to 70 psi) is applied to the panel and gasket to press the two together. The application of the pressure, together with the residual heat retained by both the gasket and the panel, activates the primer on the bonding surface. The heat activated primer interacts with the PVC material of the gasket, bonding the gasket to the sheet or frit layer.

Additional heat is introduced to the frit layer preferably by directing energy through the sheet on a side opposite to that of the gasket using a controlled, focused infra red energy source that will be further described. The additional heat further increases the activation level of the primer with the gasket and improves adhesion. Although both heat and pressure do not need to be applied simultaneously, it is preferred that both be applied for between 3 and 30 seconds. After that time, the heat and pressure are withdrawn and the contact between the panel and the gasket is allowed to cool for approximately ten to fifteen seconds. After cooling, the glass panel and bonded gasket forming the panel assembly, are moved on in the assembly process as finished goods.

For example, a 0.3175 cm (one-eighth inch) thick sheet of glass 22.9 cm (nine inches) square including a frit layer on one surface had a PVC gasket bonded thereto similar in cross section to that shown in Fig. 2 and having a one inch wide (2.54 mm) bonding surface. The gasket was moulded using injection moulding techniques in a 250 ton press using 200 tons of clamping pressure. The PVC melt temperature was 193°C (380° F). and had a nine second cure time in the mould. While the gasket was being formed, the glass sheet was locally heated to 149°C (300°F). After the gasket was formed, the mould was opened and the 149°C (300° F) panel was located with respect to the gasket which had cooled to approximately 52°C (125°F). A force of 7 Atm (14 psi) was applied for approximately seven seconds, forcing the panel and gasket against each other. Simultaneously with the application of force, the frit layer was heated using a focused infra red source described below.

Figs. 7-10 illustrate different embodiments of gasket or grommets manufactured by any one of the methods outlined above and specifically adapted for use in flush mounted panel assemblies. In Fig. 7, assembly 220 includes a sheet-like panel 222 having opposite surfaces 224, 226 terminating in a peripheral edge 228. Surface 226 includes a ceramic frit coating 230 which is bonded to a profiled gasket 232 by a primer coating 248. Profiled gasket 232, in this embodiment, is made from a modified PVC blend or other material having favourable compression set properties, and includes an arciform, curved body 234 of generally uniform thickness terminating laterally in securing surfaces 236, 238 which are bonded by primer 248. One example of gasket material is a thermoplastic rubber (TPR) such as Shell Kraton G-7430 produced by Shell Chemical Co. of Houston, Texas. Although body 234 and surfaces 236, 238 may have the same thickness, it is contemplated that body 234 may have a wall thickness which is gradational or different from that of surfaces 236, 238. Moreover, the thickness or width of each surface 236, 238 may be different from each other as will become readily apparent. Bonding surfaces 236, 238, surface 226 (frit 230) of sheet 222, and the inner wall 240 of arciform body 234 form a gas-filled chamber or bulb 239. Chamber 239 may be in fluid communication with the exterior through one or more perforations (not shown) extending through body 234 to allow the body to be compressed and form a tight seal. Instead of a gas-filled chamber providing the sealing force, it is found that the memory of the gasket, and cross-sectional profile are often sufficient to accomplish the seal.

In Fig. 8, a flush mounted panel assembly 320 includes a sheet-like panel 322 having substantially parallel surfaces 324, 326 terminating in a peripheral edge 328. Bonded to frit layer 330 on surface 326, using any one of the above-described techniques, is an arciform gasket 332 having a bulbous body 334 terminating at its base in securing flanges 342 and 344. Flanges 342, 344 are preferably, but not necessarily parallel to surface 326, co-planar with each other, and extend in opposite directions in order to bond with surface 326. Just as in the previous embodiment shown in Fig. 7, flanges 342, 344 and body 334 may have constant or gradational thicknesses depending upon the desired function. For example, arciform body wall 340 defining chamber 339 may be thinner than one or both flanges 342, 344.

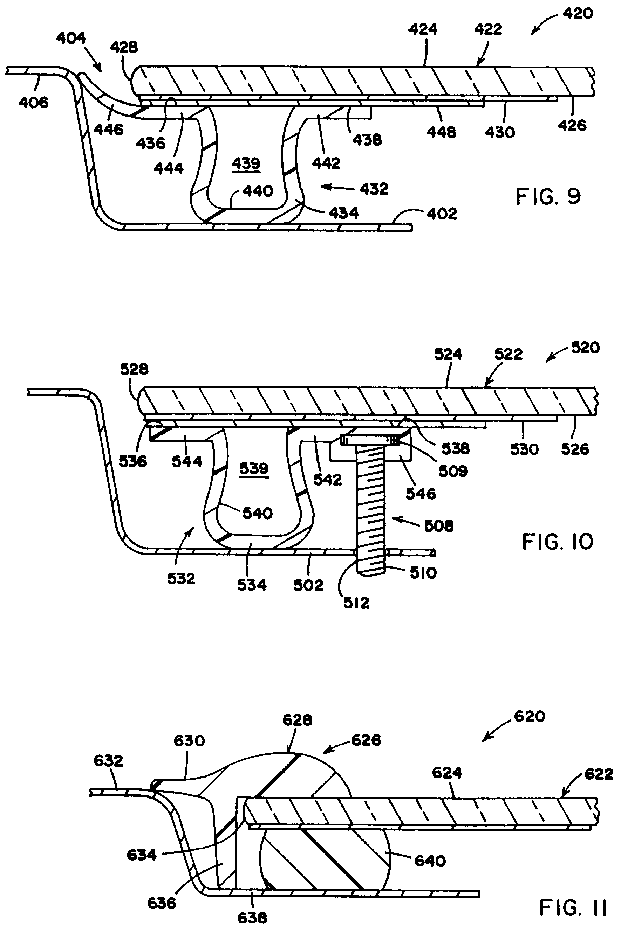

In Fig. 9, flush-mounted panel assembly 420 includes a sheet-like panel 422 having opposing surfaces 424 and 426 and a peripheral edge 428. Frit layer 430 on sheet or panel 422 is bonded, using any one of the methods already described, to gasket 432 adapted to space sheet 422 from pinch flange 402, as well as seal gap 404 between sheet metal 406 and peripheral edge 428. Gasket 432 includes an arciform body 434 terminating in securing flange 442 at one end and a second securing flange 444 at an opposite end. Securing flange 444 extends laterally away from arciform body 434 and beyond peripheral edge 428 of sheet 422 to form a lip 446. When assembly 420 is disposed within the opening defined by pinch flange 402 such that arciform body 434 engages pinch flange 402, and when assembly 420 is properly centered therein, lip 446 at the end of securing flange 444 drags across sheet metal 406 and barricades gap 404, forming a seal therein. With panel assembly 420 properly located within the vehicle opening defined by pinch flange 402, outer surface 424 of panel 422 is substantially flush with the surface defined by sheet metal 406. The panel assembly 420 may thus provide a more aerodynamic fit and style producing less wind noise than conventional mounting techniques. A further advantage associated with this assembly, as well as those described later, can be the relative ease of assembly.

Fig. 10 illustrates an embodiment 520 of the panel assembly wherein surface 526 and/or frit layer 530 is bonded to an arciform gasket 532. Gasket 532 has an arciform body 534 terminating in securing flanges 542, 544 to define a gas-filled chamber 539. Securing flange 542 has an extended thickened portion 546 inboard of body 534 in which a stud 508 has a head 509 captured during moulding. Shank 510 of stud 508 is adapted to be received or extend through a hole 512 formed in pinch flange 502. Arciform or bulbous body 534 acts both as a spacer and as a cushion for panel 522 when assembly 520 is disposed within the opening. Assembly 520 may also be aided in its positioning within the opening defined by pinch flange 502 by locating shaft 510 in hole 512. A threaded nut or pressure cap may retain stud 508 in hole 512 from an opposite side of pinch flange 502. Assembly 520, like the other embodiments, may also be retained within the opening by a suitable adhesive disposed between the sheet and/or gasket and pinch flange. The type of adhesive may vary depending upon the particular needs of the automobile assembler. One common type of adhesive is known as BETASEAL (Trade mark) , produced by Essex Chemical Corporation of Sayerville, New Jersey. The BETASEAL adhesive is designed to provide a secure bond between a glass panel and a sheet metal surface typically encountered in vehicle window assemblies.

Panel assembly 620 (Fig. 11), for use on class "A" surfaces such as vehicle windshields, includes a sheet-like panel 622 of glass which may be laminated, tempered or otherwise strengthened and has a predetermined size and geometry. An outer surface 624 is bonded to a spacer/gap seal 626 using any one of the methods previously described. Combination spacer/gap seal 626 has generally an arcuate upper profile 628 which extends away from sheet 622 and is generally parallel to surface 624. The extension of seal 626 forms a resilient, flexible lip 630 which engages sheet metal 632 to seal the gap between the peripheral edge 634 of sheet 622 and sheet metal 632. Extending perpendicularly from the lower surface of seal 626 is a generally rigid flange 636 adapted to space sheet 622 a predetermined distance from pinch flange 638. Assembly 620 is retained within the opening defined by pinch flange 638 by a bead of BETASEAL or other suitable adhesive 640 bonding panel 622 to pinch flange 638.

Although each of the previous embodiments of the gasket bonded to the sheet or panel has been described generally as made from a polymeric material, it is preferred that PVC be used. Since PVC offers several advantages over other materials which may include ease in handling, it is readily available, inexpensive and recyclable. Moreover, PVC materials may be substantially resistant to ultraviolet radiation and is substantially flexible and resilient in a variety of climatic conditions. Although PVC is preferred, a modified PVC blend or other material having favourable compression set properties may also be used including RIM urethane and thermoplastic elastomers.

The method of the invention for forming the gaskets and bonding them to the sheet-like panels offers several distinct advantages which may include changing cross sections and unusual or complex profiles for a particular panel depending upon specific design aspects such as disclosed in Fig. 1. Moreover, based upon the potential range of applications of the above panel assemblies, the Durometer hardness of the material may vary. For example, a Durometer hardness within the range of 55 to 90 will be sufficient for many applications. But where it is desired for one portion of the gasket to be flexible while another portion is stiff, a low Durometer material may be used with a material build-up used to create the stiff or harder portion of the gasket.

Figs. 12 and 13 are schematic representations of two energy sources mentioned that may be used to heat the frit layer and/or contact boundary between a panel such as 22 and a gasket such as 32 described above in relation to Fig. 2. Although each source is described in relation to producing a characteristic energy spectrum, such is by way of example only. Other energy sources may be equally effective in heating the frit layer/contact boundary such as convective, conductive, inductive and resistive heat sources. Moreover, microwave energy may be used as well.

Fig. 12 generally illustrates a controlled, focused infra red (CFIR) source 700 which may be used in both the preheating of the sheet prior to receiving the gasket, as well as heating with or without the application of pressure after the sheet and gasket contact each other.

CFIR 700 includes one or more infra red emitter assemblies 702 such as Model 5305-104 made by Radiant Energy Research, Inc. of Minneapolis, Minnesota, and disposed above sheet 722 in a pattern conforming to that region of sheet 722 adapted to receive gasket 732. Alternatively, a single infra red emitter assembly may be moved above sheet 722 by a guided robotic arm in a pattern conforming to that area to receive gasket 732. A computer/process controller 704 preferably causes the infra red emitter assembly 702 to emit infra red energy into sheet 722 from a side opposite that containing frit coating 730 and primer coating 748 although it may also be directed from the same side as the frit layer 730 and primer 748.

A spectro-photometer 706 coupled to computer/process controller 704, detects the energy reflected and radiated from sheet 722. Based upon the feedback from spectro-photometer 706, controller 704 adjusts the power of infra red energy emitted by assembly 702 to obtain maximum absorption by frit layer 730 and primer 748 and raise the temperature level to between 37.8°C and 176.7°C (100° F to 350° F). Although CFIR 700 has been described for use in both heating steps, it is contemplated that it will be most effective to heat the frit layer/contact boundary after the gasket is located with respect to the sheet.

Fig. 13, schematically illustrating a controlled area infra red (CAIR) source 800, may include one or more infra red emitters 802 such as Model FB122425B3 made by Casso-Solar Corp., of Pomona, New York, and may be distributed above and aligned with sheet 822. Radiation generated by emitter 802 is controlled by a controller 804 based upon input from a thermocouple 806 attached to emitter 802, and a spectrophotometer 808 angularly disposed with respect to sheet 822. A reflector 810 may be disposed beneath sheet 822 to reflect heat energy back into the sheet. Sheet 822 may be supported above reflector 810 by insulator blocks or spacers 816 to prevent heat loss by conduction into reflector 810. Contemplated in both of the heating options, but shown only in Fig. 13, is a plenum 812 and exhaust fan 814, to vent fumes driven off during the heating process. Moreover, each sheet may be properly located with respect to each heating source by using a template or guide for either the panel or sheet such as 818 or gasket (708 in Fig. 12).

Since the radiation produced by emitter 702 is preferably introduced onto the sheet 722 from a side opposite that containing primer coating 748, it is preferred that sheet 722 have a high transmissivity to the wave length of radiation selected. Emitters 702 and 802 both are capable of producing infra red radiation having a wavelength greater than 7.0 x 103 Angstroms (A). The transmissivity of the radiation through each sheet is greatly affected by its particular characteristics. For example, tinted or opaque panels may have a lower transmissivity since the pigments or colouration within the material may absorb a portion of the radiation. For materials having lower transmissivities, it is preferred to select wavelengths of radiation which promulgate better through the materials, yet are absorbed by the frit layer at the contact boundary between the sheet and primer coating. In the preferred embodiment of this invention, sheets 22 are glass sheets and may be single sheets or laminated sheets, depending on the desired function in the vehicle.

In order to reduce any problems associated with heating and cooling large expanses of glass or plastic panels, it is preferred that each of the above radiation sources direct their energy to an area restricted portion of the panel or sheet. For example, since it is desired to heat only that portion of the sheet adapted to engage the gasket, each energy source 702, 802 may be adapted so that the radiation is applied only to the peripheral margin or other location receiving the gasket. Alternatively, each source may be moved around the sheet by a guided robotic arm, as mentioned above or a mask may be used to limit the exposed area. Moreover, one or more emitters such as 702, 802 may be recessed within a tool patterned to coincide with the area of the panel to be heated.

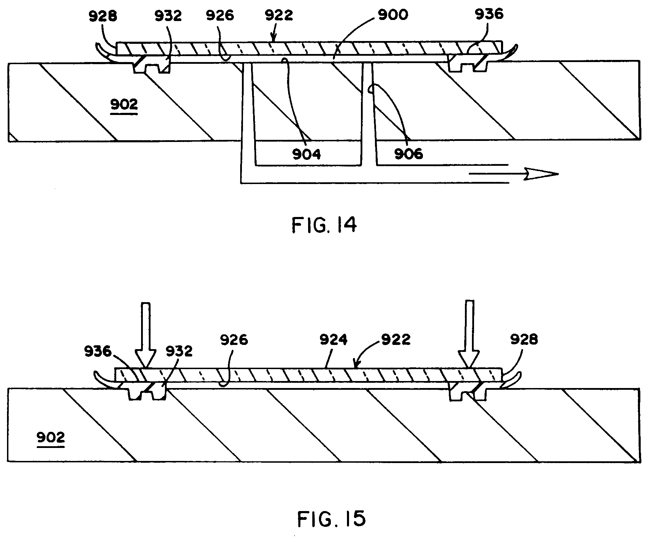

Figs. 14 and 15 illustrate two techniques for forcing each sheet into contact with each gasket. Preferably, one method and apparatus (Fig. 14) includes the creation of a negative pressure or vacuum within chamber 900 formed by the inside perimeter of gasket 932 within tool half or fixture 902, surface 926 of sheet 922 and surface 904 of tool 902. Suction lines 906 extending through tool 902 are coupled to a vacuum source (not shown). The vacuum created in chamber 90 causes the sheet 922 to be forced downwardly by atmospheric pressure against bonding surface 936 of gasket 932.

An alternative method and apparatus (Fig. 15) of forcing sheet 922 into contact with gasket 932 is by the mechanical application of pressure or force on sheet surface 924 substantially opposite surface 926 receiving gasket 932. It is contemplated that a variety of mechanisms may be used to exert the force, pushing the sheet and gasket together, including rams, either hydraulic or pneumatic, associated with the opposite tool half, a panel carrier, robotic arm and the like. In one method, the sheet and gasket are forced against each other in the moulding tool such as 50, 50A previously described by the tool half not retaining the gasket. Pressure feet or pads may be located between surface 924 and the opposite tool half such as 62 in order to precisely locate the force on surface 924.

As outlined above, a variety of mechanisms exist for placing sheet 22 into intimate contact with the bonding surface of gasket 32'. It is contemplated by this invention that the location of gasket 32 and sheet 22 may be reversed to obtain substantially the same results.

## Claims

1. A method of making a vehicle assembly (20), comprising:
forming a polymeric gasket (32) by injection molding in a mold (5), said formed gasket having at least one surface (36);
providing a panel (22) in the form of a sheet having at least one surface, said panel being separate from said formed gasket; and
applying a primer coating (48) to at least one of said surfaces of said panel and said formed gasket, characterised by locating said panel on said formed gasket while said formed gasket remains in the mold so that said one surface of said formed gasket and said one surface of said panel form a contact area; and
forcing said formed gasket against said panel to promote adhesion between said panel and said formed gasket.

2. A method according to claim 1 including heating the area of the panel in contact with the gasket which preferably includes heating the primer (48) and/or heating the primer by heat derived from the gasket.

3. A method according to claim 2 wherein heating the panel occurs prior to contacting the panel with the gasket.

4. A method according to any preceding claim wherein the panel has a frit coating (30) on the surface.

5. A method according to claims 2 or 3 wherein the heating includes heating the frit coating (30) to enhance bonding the gasket to the panel.

6. A panel assembly comprising:
a panel (422) having a peripheral edge (428) and at least one surface (426);
a gasket (432) formed by injection molding in a mold (5) having an arciform body (434) and first and second securing flanges (436,438) adapted to engage the sheet-like panel at spaced locations; and
a heat-activated primer coating (448) disposed on said at least one surface of said panel for bonding said gasket to said panel.

7. An assembly as claimed in claim 6 for a vehicle opening in which the panel has first and second surfaces (436,438) terminating in a common peripheral edge, the gasket being adapted to engage the first panel surface and extend outwardly beyond the peripheral edge, and in which the gasket has a flange (446) for locating the panel from the vehicle opening and extending substantially perpendicular from the peripheral edge at a position outboard of the peripheral edge.

8. A method of fitting a panel assembly (20) into an opening, suitably in a vehicle, the method comprising securing or fastening a panel assembly according to claim 6 or 7 or manufactured by a method according to any of claims 1 to 5 to support means (202,302,402,502,638) whereby the panel (22) extends into at least part of the opening.

9. A vehicle provided with a panel assembly according to claim 6 or 7 or manufactured by a method according to any of claims 1 to 5.

## Patentansprüche

1. Verfahren zur Herstellung eines Fahrzeugaufbaus (20), welches folgende Schritte aufweist:
Bildung einer polymeren Dichtung (32) durch Spritzgießen in einer Form (5), wobei die gebildete Dichtung mindestens eine Oberfläche (36) aufweist;
Schaffen einer Platte (22) in Form einer Tafel mit mindestens einer Oberfläche, wobei die Platte von der gebildeten Dichtung getrennt ist; und
Auftragen einer Primerbeschichtung (48) auf mindestens eine der Oberflächen der Platte und der gebildeten Dichtung, dadurch gekennzeichnet, daß die Platte auf die gebildete Dichtung gegeben wird, während die gebildete Dichtung in der Form bleibt, so daß die eine Oberfläche der gebildeten Dichtung und die eine Oberfläche der Platte einen Kontaktbereich bilden; und
Drücken der gebildeten Dichtung gegen die Platte, um eine Klebeverbindung zwischen der Platte und der gebildeten Dichtung herbeizuführen.

2. Verfahren nach Anspruch 1, umfassend die Erwärmung des Bereiches der Platte, der mit der Dichtung in Kontakt steht, welches vorzugsweise das Erwärmen des Primers (48) und/oder das Erwärmen des Primers durch von der Dichtung abgeleitete Wärme umfaßt.

3. Verfahren nach Anspruch 2, wobei das Erwärmen der Platte vorgenommen wird, bevor die Platte mit der Dichtung in Kontakt gebracht wird.

4. Verfahren nach einem der vorhergehenden Ansprüche, wobei die Platte eine Frittebeschichtung (30) auf der Oberfläche aufweist.

5. Verfahren nach einem der Ansprüche 2 oder 3, wobei die Erwärmung das Erwärmen der Frittebeschichtung (30) zur Verstärkung der Klebebindung zwischen Dichtung und Platte umfaßt.

6. Plattenaufbau, umfassend:
eine Platte (422) mit einer peripheren Kante (428) und mindestens einer Oberfläche (426);
eine Dichtung (432), geformt durch Spritzgießen in einer Form (5) mit einem bogenförmigen Körper (434) und einem ersten und einem zweiten Sicherungsflansch (436, 438), die geeignet sind, in die tafelartige Platte an beabstandeten Positionen einzugreifen; und
eine wärmeaktivierte Primerbeschichtung (448) an mindestens einer Oberfläche der Platte zum Ankleben der Dichtung an die Platte.

7. Aufbau nach Anspruch 6 für eine Fahrzeugöffnung, in der die Platte eine erste und zweite Oberfläche (436, 438) aufweist, welche in einer gemeinsamen peripheren Kante enden, wobei die Dichtung dazu geeignet ist, in die erste Plattenoberfläche einzugreifen und sich nach außen über die periphere Kante hinaus zu erstrecken und in welcher die Dichtung über einen Flansch (446) verfügt, um die Platte von der Fahrzeugöffnung zu positionieren und um sich im wesentlichen senkrecht von der peripheren Kante an einer Position außerhalb der peripheren Kante zu erstrecken.

8. Verfahren zum Einbau eines Plattenaufbaus (20) in eine Öffnung, geeigneterweise in einem Fahrzeug, das Verfahren umfassend das Sichern oder Befestigen eines Plattenaufbaus nach Anspruch 6 oder 7 oder hergestellt durch ein Verfahren nach einem der Ansprüche 1 bis 5 an Haltevorrichtungen (202, 302, 402, 502, 638), wobei sich die Platte (22) mindestens in einen Teil der Öffnung hinein erstreckt.

9. Fahrzeug, versehen mit einem Plattenaufbau nach Anspruch 6 oder 7 oder hergestellt durch ein Verfahren nach einem der Ansprüche 1 bis 5.

## Revendications

1. Procédé de fabrication d'un ensemble (20) pour véhicule, comprenant les étapes consistant à :
- former un joint d'étanchéité polymère (32) par moulage par injection dans un moule (5), ledit joint d'étanchéité formé ayant au moins une surface 36;
- fournir un panneau (22) se présentant sous la forme d'une feuille ayant au moins une surface, ledit panneau étant séparé dudit joint d'étanchéité formé, et
- appliquer une couche de fond (48) sur au moins une desdites surfaces dudit panneau et dudit joint d'étanchéité formé,
caractérisé en ce qu'on place ledit panneau sur ledit joint d'étanchéité formé, tandis que ledit joint d'étanchéité formé reste dans le moule de telle sorte que ladite une surface dudit joint d'étanchéité formé et ladite une surface dudit panneau forment une aire de contact, et
on presse ledit joint d'étanchéité formé contre ledit panneau pour favoriser l'adhésion entre ledit panneau et ledit joint d'étanchéité formé.

2. Procédé suivant la revendication 1, suivant lequel on chauffe l'aire du panneau en contact avec le joint d'étanchéité, ce qui implique de préférence le chauffage de la couche de fond (48) et/ou le chauffage de la couche de fond avec la chaleur dérivée du joint d'étanchéité.

3. Procédé suivant la revendication 2, dans lequel on chauffe le panneau avant de l'amener en contact avec le joint d'étanchéité.

4. Procédé suivant l'une quelconque des revendications précédentes, dans lequel la surface du panneau est revêtue d'une couche frittée (30).

5. Procédé suivant la revendication 2 ou 3, dans lequel le chauffage consiste à chauffer la couche frittée (30) pour améliorer la jonction du joint d'étanchéité au panneau.

6. Ensemble de panneau comprenant :
- un panneau (422) ayant un bord périphérique (428) et au moins une surface (426);
- un joint d'étanchéité (432) formé par moulage par injection dans un moule (5) ayant un corps arciforme (434) ainsi qu'un premier et un second rebords de fixation (436, 438) à même de venir en contact avec le panneau en forme de feuille en des endroits espacés l'un de l'autre, et
- une couche de fond (448) activée par la chaleur disposée sur ladite au moins une surface dudit panneau pour coller ledit joint d'étanchéité audit panneau.

7. Ensemble suivant la revendication 6, pour une ouverture de véhicule dans lequel le panneau a une première et une seconde surfaces se terminant dans un bord périphérique commun, le joint d'étanchéité étant à même de venir en contact avec la première surface du panneau et de s'étendre vers l'extérieur au-delà du bord périphérique, et dans lequel le joint d'étanchéité comprend une lèvre (446) pour mettre en place le panneau par rapport à l'ouverture de véhicule et s'étendant sensiblement perpendiculairement depuis le bord périphérique à un endroit extérieur au bord périphérique.

8. Procédé pour ajuster un ensemble de panneau (20) dans une ouverture, avantageusement dans un véhicule, le procédé comprenant la fixation ou le blocage d'un ensemble de panneau suivant la revendication 6 ou 7, ou fabriqué par un procédé conforme à l'une quelconque des revendications 1 à 5, à un moyen de support (202, 302, 402, 502, 638), le panneau (22) s'étendant dans au moins une partie de l'ouverture.

9. Véhicule pourvu d'un ensemble de panneau suivant la revendication 6 ou 7, ou fabriqué par un procédé suivant l'une quelconque des revendications 1 à 5.
